# EUROPEAN PATENT SPECIFICATION

(11) **EP 4 435 161 B1**
(45) Date of publication and mention of the grant of the patent: **04.11.2026**
(21) Application number: 22895563.9
(22) Date of filing: 14.11.2022
(51) Int. Cl.: D02G 3/18, D03D 1/00, B29C 43/32, D06M 15/693, D03D 15/267, D03D 15/41, D03D 15/49, B30B 15/06, B32B 5/02, B32B 5/26, D03D 15/33, D06M 15/256, D06N 3/00, D06N 3/12

(54) **HOT-PRESSING CUSHION MATERIAL**
HEISSGEPRESSTES POLSTERMATERIAL
MATÉRIAU DE COUSSIN DE PRESSAGE À CHAUD

(30) Priority: 16.11.2021 JP 2021186661
(43) Date of publication of application: 25.09.2024
(73) Proprietor: Yamauchi Corporation, Hirakata-shi, Osaka 573-1132 (JP)
(72) Inventor: KOUNO, Shuhei, Hirakata-shi, Osaka 573-1132 (JP); YOSHIDA, Akira, Hirakata-shi, Osaka 573-1132 (JP)
(74) Representative: Müller Hoffmann & Partner
(86) International application number: PCT/JP2022/042185
(87) International publication number: WO 2023/090281

(56) References cited:
- EP-A1- 3 162 527
- JP-A- 2008 132 656
- JP-B1- 6 790 297
- JP-Y1- S4 123 119

## Description

### TECHNICAL FIELD

The present invention relates to a cushion material for hot pressing.

### BACKGROUND ART

In production of components of precision equipment including a printed circuit board such as a copper-clad laminate, a flexible printed circuit board, and a multilayer board, an IC card, a liquid crystal display board, a ceramic laminate, and an electronic component (hereinafter, collectively referred to as "laminate"), it is a practice to perform hot pressing, such as press forming or thermocompression bonding.

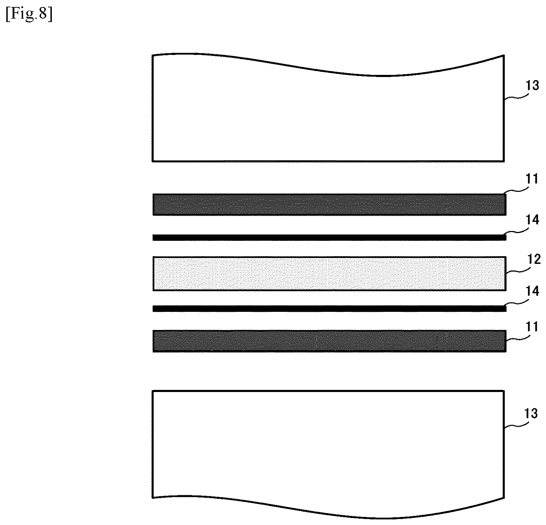

Figure 8 is a diagram for illustrating a pressing device that performs press forming or thermocompression bonding on a printed circuit board or the like. This pressing device includes a pair of heating platens 13, 13 that face each other. The pair of heating platens 13, 13 are means to heat and pressurize a printed circuit board. The pressing device sandwiches a material 12 to be pressed, which is a laminate material, with the pair of heating platens 13, 13, and presses the material 12 to be pressed at a fixed pressure and heat. At this point of operation, to apply uniform heat and pressure to the material 12 to be pressed over the entire surface, a cushion material 11 having a plate shape is interposed between a heating platen 13 and the material 12 to be pressed. In Figure 8, a mirror plate 14 made of stainless steel is further interposed between the cushion material 11 and the material 12 to be pressed.

Examples of general properties that the cushion material 11 is required to have include cushioning property of absorbing unevenness of the heating platen 13 and the material 12 to be pressed, in-plane uniformity for transferring heat and a force from the heating platen 13 to the material 12 to be pressed to achieve uniform temperature and pressure over the entire press surface, heat transfer property for efficiently transferring heat from the heating platen 13 to the material 12 to be pressed, and heat resistance of withstanding a pressing temperature.

For example, Patent Document 1 discloses a cushion material in accordance with the preamble of claim 1, in particular a cushion material for hot pressing including a fiber-rubber composite material layer formed of a woven fabric and rubber impregnated into that woven fabric, a texturized yarn made of glass fibers being used for at least one of warp or weft in the woven fabric. To allow this cushion material for hot pressing to exhibit preferable cushioning property, pores are provided in the fiber-rubber composite material layer.

Furthermore, JP 6790297 B1 discloses a cushioning material for hot pressing having a cushion portion (excluding those impregnated with rubber), the cushion portion includes a woven fabric and a polyimide resin adhered to the surface of fibers constituting the woven fabric, wherein the cushion portion contains voids inside, and the warp and / or weft is a texturized yarn made of glass fiber.

### LIST OF PRIOR ART DOCUMENT

### PATENT DOCUMENT

Patent Document 1: JP2008-132656A

### SUMMARY OF INVENTION

### TECHNICAL PROBLEM

In general, a cushion material for hot pressing is repeatedly used, and thus required to have durability. In Patent Document 1, opening of a single yarn or bulging of a twisted yarn is performed by air jet texturing to prepare a texturized yarn (bulked yarn) having a bulge like a woolen yarn, and the texturized yarn is used for a woven fabric to increase a porosity in the woven fabric, thus achieving preferable cushioning property. The inventors of the present invention made an attempt to increase cushioning property and durability by increasing the thickness of a texturized yarn by forming bulge by frequently using air jet texturing. However, in this case, it is found that glass fibers are bent due to frequent use of air jet texturing, and although cushioning property is high at an initial stage, properties are significantly lowered with an increase in use frequency, so that durability of a cushion material for hot pressing is lowered.

In view of the above-mentioned problem, an object of the present invention is to provide a cushion material for hot pressing that is excellent in durability and that can maintain preferable cushioning property even when the cushion material for hot pressing is repeatedly used.

### SOLUTION TO PROBLEM

This object is solved by the subject-matter of the independent claim. Further advantageous embodiments and refinements of the present invention are described in the respective sub-claims. The invention is defined by the claims. Embodiments not covered by the claimed subject-matter do not form part of the invention.

To achieve the above-mentioned object, the present invention is directed to a cushion material for hot pressing including a cushion part, wherein
the cushion part includes
a woven fabric in which a twisted yarn is used for at least one of warp or weft; and
a polymer material that is adhered to a surface of a fiber forming the woven fabric, whereby
the twisted yarn is formed by twisting a plurality of texturized yarns made of a glass fiber.

### ADVANTAGEOUS EFFECT OF INVENTION

According to the present invention, it is possible to provide a cushion material for hot pressing that is excellent in durability and that can maintain preferable cushioning property even when the cushion material for hot pressing is repeatedly used.

### BRIEF DESCRIPTION OF DRAWINGS

[Figure 1] Figure 1 shows a cushion material for hot pressing according to an embodiment.
[Figure 2] Figure 2 shows a normal glass fiber yarn.
[Figure 3] Figure 3 shows a texturized yarn made of glass fibers.
[Figure 4] Figure 4 is a diagram showing a texturized yarn composite twisted yarn obtained by twisting a plurality of texturized yarns.
[Figure 5] Figure 5 is a diagram showing a cushion material for hot pressing according to another embodiment.
[Figure 6] Figure 6 is a diagram showing a cushion material for hot pressing according to another embodiment.
[Figure 7] Figure 7 is a graph obtained by plotting results from table 1 onto a graph.
[Figure 8] Figure 8 is a diagram for illustrating a pressing device that performs press forming or thermocompression bonding on a printed circuit board or the like.

### DESCRIPTION OF EMBODIMENTS

Hereinafter, a cushion material for hot pressing according to the present invention will be described in detail with reference to drawings.

### [Cushion material for hot pressing according to present embodiment]

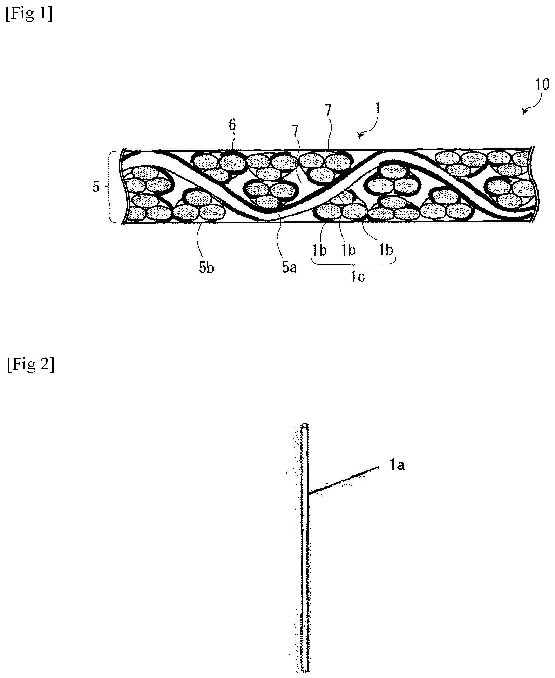

Figure 1 shows a cushion material 10 for hot pressing according to the present embodiment. As shown in Figure 1, the cushion material 10 for hot pressing includes at least a cushion part 1. The cushion part 1 is a sheet-like cushion member (cushion sheet) formed of a woven fabric 5 and a polymer material 6 adhered to the surfaces of the fibers forming the woven fabric 5. The cushion part 1 has pores 7 therein.

In the cushion part 1, at least one of warp 5a or weft 5b of the woven fabric 5 is a twisted yarn. The twisted yarn is formed by twisting a plurality of texturized yarns made of glass fiber. Hereinafter, such a twisted yarn is referred to as "texturized yarn composite twisted yarn". In Figure 1, the warp 5a is a normal glass fiber yarn, and the weft 5b is a texturized yarn composite twisted yarn. The warp 5a may also be a texturized yarn composite twisted yarn in the same manner as the weft 5b.

The texturized yarn and the texturized yarn composite twisted yarn will be described.

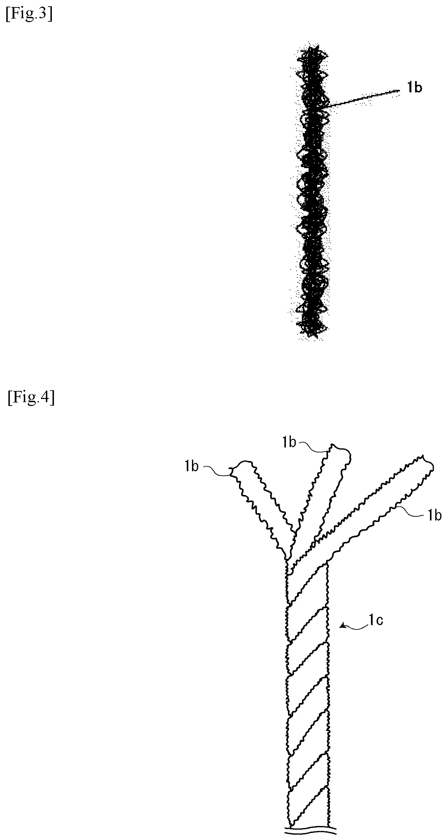

Figure 2 is a diagram showing a normal glass fiber yarn 1a. Figure 3 is a diagram showing a texturized yarn 1b made of glass fiber. Figure 4 is a diagram showing a texturized yarn composite twisted yarn 1c obtained by twisting a plurality of texturized yarns.

The glass fiber yarn 1a shown in Figure 2 is a single yarn, a roving yarn, in which a plurality of single fibers is bundled, or a yarn in which a plurality of single yarns or a plurality of roving yarns is twisted. Unlike the glass fiber yarn 1a shown in Figure 2, the texturized yarn 1b shown in Figure 3 is a yarn in which short fibers forming a glass yarn are arranged not in a parallel state, but in an entangled and disordered state, so that the occupied area is large. In other words, the texturized yarn has bulges like a woolen yarn and hence, different from a normal woven fabric, a woven fabric made of the texturized yarns has a large number of pores therein. The texturized yarn 1b itself has a large number of pores therein, thus allowing appropriate impregnation of a polymer material.

The texturized yarn 1b is a bulked yarn obtained by performing bulk texturing on a glass fiber yarn. The bulked yarn is a textured yarn that is caused to have bulges like a woolen yarn by opening a yarn or by performing bulging of a twisted yarn.

For the texturized yarn 1b, a staple yarn, a sliver yarn, or the like may be used instead of a bulked yarn. A staple yarn is a yarn obtained by spinning cotton like glass short fibers into a yarn. A sliver yarn is a yarn obtained by twisting bulky short fibers (slivers) having no twisting.

It is preferable that the texturized yarn 1b according to the present embodiment be a yarn obtained by bundling 1000 to 15000 single fibers that are glass fibers. The reason for this is to obtain appropriate cushioning property and sufficient durability. The number of single fibers is preferably 1500 or more, and is more preferably 2000 or more. Further, the number of single fibers is preferably 12000 or less, and more preferably 10000 or less. In the case in which the texturized yarn is a twisted yarn, when the number of twisting is excessively small, there is a possibility of insufficient durability, while when the number of twisting is excessively large, cushioning property may be lowered. Accordingly, the number of twisting per 2.54 cm (1 inch) length of the glass fiber is preferably 0.1 to 10 times, and is more preferably 0.5 to 5 times. It is preferable that the diameter of a single fiber of the glass fiber forming the texturized yarn be 3 to 11 µm. The reason for this is that when the diameter of the single fiber is less than 3 µm, it is difficult in terms of production to perform working, and the number of required single fibers increases, while when the diameter of the single fiber is more than 11 µm, the fiber becomes liable to bend, thus adversely affecting properties.

Although a general twisted yarn refers to a yarn in which a plurality of yarns is twisted, the texturized yarn composite twisted yarn 1c shown in Figure 4, which is the twisted yarn of the present invention, refers to a yarn formed by twisting a plurality of (three in Figure 4) texturized yarns 1b shown in Figure 3. That is, the texturized yarn composite twisted yarn used in the present invention is obtained by twisting a plurality of texturized yarns, and is clearly distinguished from, for example, a texturized yarn obtained such that twisted yarns are further twisted, and bulk texturing is performed in the final step. To obtain preferable cushioning property and sufficient durability, it is preferable that the total number of single fibers of the texturized yarn composite twisted yarn be 3000 to 100000. The number of single fibers is preferably 4500 or more, and is more preferably 6000 or more. Further, the number of single fibers is more preferably 80000 or less, and further preferably 60000 or less. The number of twisting of the texturized yarn composite twisted yarn may be set to 1 to 4 times per 2.54 cm (1 inch) length of the texturized yarn, for example.

To increase cushioning property of the cushion part 1, it is sufficient to increase the number of single fibers of the warp 5a or the weft 5b of the woven fabric 5. However, when the number of single fibers is only increased, the cushion part 1 is easily flattened due to compression, so that durability of the cushion part 1 is reduced. In view of the above, to obtain preferable cushioning property and sufficient durability, the inventors of the present invention adopted a configuration in which not only that a texturized yarn is simply used for at least one of the warp 5a or the weft 5b of the woven fabric 5, but also that a plurality of texturized yarns is further twisted to form the texturized yarn composite twisted yarn 1c.

The cushion part 1 is a sheet-like object. When the thickness of the cushion part 1 is excessively small, there is a possibility of insufficient cushioning property, while when the thickness of the cushion part 1 is excessively large, there is a possibility of insufficient heat transfer property. Therefore, although it depends on the application, it is preferable that the appropriate thickness of the cushion part 1 be set within a range of 0.5 to 5.0 mm, for example. Further, when the cushion parts 1 are used in a laminated state, it is preferable that the total thickness of the cushion parts 1 be set to a range of 0.5 to 5.0 mm.

Return to Figure 1. In the cushion part 1, the polymer material 6 is adhered to the surfaces of the fibers forming the woven fabric 5. Although the polymer material 6 moderately enters the pores 7 of the texturized yarn composite twisted yarn and the pores 7 of the weave, the polymer material 6 does not completely close the pores 7 and hence, the pores 7 remain in the cushion part 1. Therefore, the cushion material 10 for hot pressing according to the present embodiment exhibits preferable cushioning property. The texturized yarn composite twisted yarns are woven, so that the cushion material 10 for hot pressing is in the form of a woven fabric. Accordingly, the cushion material 10 for hot pressing has more preferable grammage accuracy compared with a non-woven fabric, and is excellent in in-plane uniformity. Further, the cushion material 10 for hot pressing according to the present embodiment is in the form of a woven fabric, thus achieving a smaller thickness than a non-woven fabric, and also being excellent in heat transfer property.

Although not particularly limited, synthetic rubber or a synthetic resin may be used for the polymer material 6. Specific examples of the polymer material 6 include synthetic rubber, such as fluororubber, EPM, EPDM, hydrogenated nitrile rubber, silicone rubber, acryl rubber, and butyl rubber, and synthetic resins, such as a fluororesin, a polyimide resin, a polyamide resin, and a polyether ether ketone resin. For the polymer material, it is preferable to use a material having a thermal decomposition temperature (temperature at weight loss of 5%) and a glass transition temperature that exceed a pressing temperature. From such a viewpoint, particularly preferable polymer materials include fluororubber and a polyimide resin.

The polymer material protects glass fiber, and couples the points of contact of the fibers (including points of contact between filament fibers forming the texturized yarn in addition to the points of contact between warp and weft). Therefore, the cushion material 10 for hot pressing that includes the polymer material 6 can reduce, when the cushion material 10 for hot pressing is repeatedly used for hot pressing, breakage of the glass fibers, thus suppressing loss of elasticity of the woven fabric 5 and hence, preferable cushioning property can be maintained.

### (Cushioning property of cushion part 1)

When t₁ denotes the thickness of the cushion material 10 for hot pressing at the time of compressing the cushion material 10 for hot pressing at a temperature of 230°C with a pressurizing force of 0.01 kgf/cm², and when t₂ denotes the thickness of the cushion material 10 for hot pressing at the time of compressing the cushion material 10 for hot pressing at a temperature of 230°C with a pressurizing force of 40 kgf/cm², cushioning property Fn of the cushion material 10 for hot pressing can be expressed by (t₁ - t₂) × 1000/t₂.

The thicknesses t₁, t₂ of the cushion material 10 for hot pressing at the time of compressing the cushion material 10 for hot pressing under the above-mentioned conditions for a pressing test can be measured by a testing machine having a compressing function, such as an instron universal testing machine (made by Instron) or an autograph precision universal testing machine (made by Shimadzu Corporation).

It is preferable to set the cushioning property Fn measured as described above to 400 or more. By setting the cushioning property Fn to within such a range, it is possible to impart sufficient cushioning property to the cushion material 10 for hot pressing. A more preferable range of the Fn value is 420 or more, and a further preferable range of the Fn value is 450 or more.

### (Loss on ignition of texturized yarn composite twisted yarn)

The polymer material 6 is adhered to the surfaces of the fibers forming the woven fabric 5 of the cushion part 1, so the cushion material 10 for hot pressing to maintain preferable properties and suppressing loss of elasticity of the woven fabric 5. It is preferable to set the adhesion amount of the polymer material 6 such that, when an ignition loss test is performed, loss on ignition (LOI) of the texturized yarn composite twisted yarn that is extracted from the cushion material 10 for hot pressing and to which the polymer material 6 is adhered is 5 to 30 mass%. It is more preferable to set loss on ignition to 8 mass% or more. Further, it is more preferable to set loss on ignition to 25 mass% or less. The ignition loss test is a test that measures a weight change of the texturized yarn composite twisted yarn after some components of the polymer material 6 are volatilized by heating the texturized yarn composite twisted yarn extracted from the cushion material 10 for hot pressing to a high temperature.

As a method for testing loss on ignition, first, a sample having a square shape with 50 mm square is collected from the cushion material for hot pressing, and ten texturized yarn composite twisted yarns are extracted from that sample. That is, the ten texturized yarn composite twisted yarns having a length of 50 mm are prepared. These specimens are sufficiently dried and, thereafter, are weighed in a state of being in a crucible. The weight at this point of operation is expressed as "ma".

Next, the crucible including the specimens is charged into a muffle furnace and is heated for approximately one hour at approximately 650°C and, thereafter, the crucible including the specimens is weighed. The weight at this point of operation is expressed as "mb".

When the mass of the crucible is expressed as "mc", loss on ignition LOI can be expressed by the following formula. $LOI = \left(ma-mb\right) / \left(ma-mc\right) \times 100$

### [Cushion material for hot pressing according to another embodiment]

It is sufficient for the cushion material 10 for hot pressing to include at least the cushion part 1, and may include only the cushion part 1. The cushion part 1 of the cushion material 10 for hot pressing may have one layer or a plurality of layers.

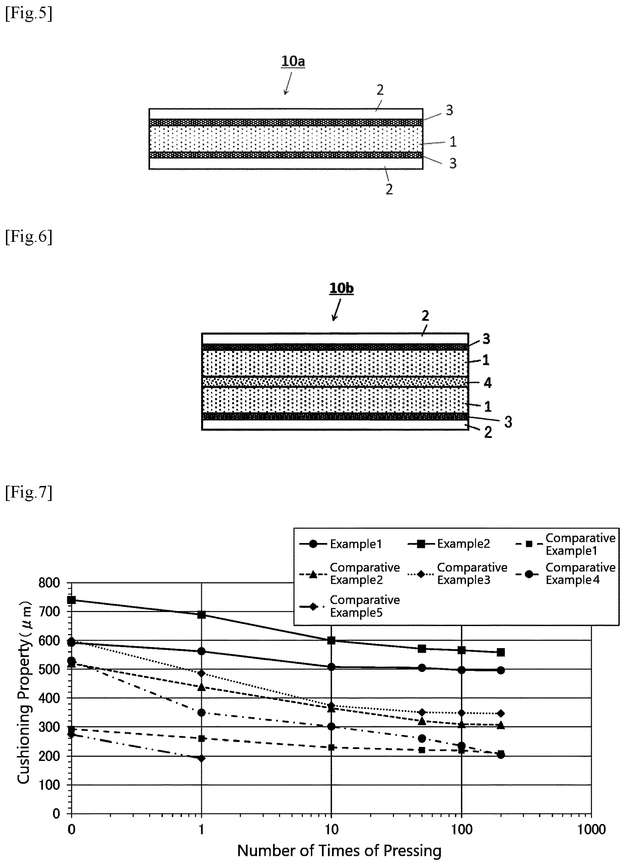

Figure 5 is a diagram showing a cushion material 10a for hot pressing according to another embodiment. As shown in Figure 5, in the cushion material 10a for hot pressing, surface layer portions 2 are laminated on the surfaces of the cushion part 1 via adhesive layer portions 3. The surface layer portions 2 are provided mainly for imparting mold releasability to the cushion material for hot pressing. As a material of the surface layer portion 2, a synthetic resin film or a material in which a mold releasability resin is applied by coating to the surfaces of a base material made of a woven fabric may be used, for example. To withstand high temperature pressing, it is particularly preferable to use a material having preferable dimension stability when the material is used at a high temperature, having no deformation, no close contact, and having preferable mold releasability. It is preferable to set the thickness of the surface layer portion 2 to 0.1 to 0.5 mm, for example. For the adhesive layer portion 3, it is preferable to use the same polymer material as the cushion part 1.

Figure 6 is a diagram showing a cushion material 10b for hot pressing according to another embodiment. As shown in Figure 6, in the cushion material 10b for hot pressing, two cushion parts 1 are laminated via an adhesive sheet portion 4. Further, the surface layer portions 2 are laminated to the upper surface of one cushion part 1 and the lower surface of the other cushion part 1 via the adhesive layer portions 3. The cushion part 1 is formed by causing a woven fabric made of glass fibers to impregnate a polymer material. Accordingly, although there is a limitation on the thickness of the cushion part 1, a configuration in which two cushion parts 1 are laminated as described above has an advantage that it is possible to further increase the total thickness of the cushion parts 1. Adhesion between the cushion parts 1 may be simply made by only an adhesive agent. However, in this case, pores of the weave of the cushion part 1 are filled with the adhesive agent, so that cushioning property may be lowered. Therefore, it is preferable to use the adhesive sheet portion 4. The adhesive sheet portion 4 is a sheet-like adhesive layer in which an adhesive agent is applied by coating to a plain woven fabric formed from a normal glass fiber yarn 1a, for example. It is preferable to use a polymer material for this adhesive agent in the same manner as the cushion part 1. To prevent fraying of fibers from the side surface and shedding of fluff, the side surfaces of the produced cushion material for hot pressing may be covered by a heat-resistant resin.

### [Method for producing cushion material for hot pressing according to embodiment]

First, a woven fabric is prepared in which at least one of warp or weft is the texturized yarn composite twisted yarn. The texturized yarn composite twisted yarn is formed by twisting a plurality of texturized yarns (glass bulked yarns) made of glass fibers. A method for weaving a woven fabric is not limited, and a plain weave, a twill weave, or other known weave may be adopted, for example.

Next, a polymer material (fluororubber, a polyimide resin, or the like) is adhered to at least the surfaces of the fibers forming a woven fabric. For example, in the case in which the polymer material is fluororubber, the woven fabric is immersed into unvulcanized fluororubber solution, which is obtained by dissolving unvulcanized fluororubber at predetermined concentration, and, thereafter, is sufficiently dried to cause fluororubber to be adhered to the surfaces of the fibers forming a woven fabric. With such operations, it is possible to prepare a cushion part (cushion sheet) 1. In the case in which the polymer material is a polyimide resin, for example, polyimide resin varnish having predetermined concentration is applied by coating to a woven fabric, and is sufficiently dried to cause a polyimide resin to be adhered to the surfaces of the fibers forming a woven fabric. With such operations, it is possible to prepare a cushion part (cushion sheet) 1.

It is preferable to set the adhesion amount of the polymer material to 20 to 300 g/m², for example. The adhesion amount of the polymer material can be adjusted by wring out with a resin roll, a rubber roll, a metal roll, or the like. As described above, it is preferable to set the adhesion amount of the polymer material such that, when an ignition loss test is performed, loss on ignition of the texturized yarn composite twisted yarn to which a polymer material extracted from the cushion material for hot pressing is adhered is 5 to 30 mass%.

In the woven fabric that is obtained as described above and in which the polymer material is adhered to the surfaces of the fibers, the fibers are fixed and are brought into a covered state and hence, it is possible to maintain the shape and pores of the woven fabric even when the woven fabric is used at high temperatures. Therefore, even when the woven fabric is repeatedly used, it is possible to ensure preferable cushioning property.

In the case in which the cushion material for hot pressing includes the surface layer portion (surface layer sheet) 2, for example, it is possible to use a surface layer sheet obtained such that a polyimide resin forming the surface layer portion 2 is applied by coating to one surface forming the surface side of the sheet being a base material, and is dried and, thereafter, a fluororubber or a polyimide resin forming the adhesive layer portion 3 is applied by coating to the other surface forming the adhesive surface side and is dried.

In the case in which the cushion material for hot pressing includes the adhesive sheet portion (adhesive sheet) 4, for example, adhesive sheet 4 may be used that is obtained such that fluororubber or a polyimide resin is applied by coating to both surfaces of the sheet forming the base material, and is dried. The adhesive sheet portion 4 may be a film including no base material.

In the case in which the cushion material for hot pressing has a structure in which sheet-like objects are laminated, the cushion material for hot pressing can be produced such that the cushion parts 1 and other sheet-like objects are laminated (for example, the surface layer portion (surface layer sheet) 2, the cushion part (cushion sheet) 1, the adhesive sheet portion 4, the cushion part (cushion sheet) 1, and the surface layer portion (surface layer sheet) 2 are laminated), and are formed into an integral body by hot pressing.

The cushion material for hot pressing according to the present invention can be used when press forming or thermocompression bonding is performed in producing a laminate, such as a printed circuit board, by a method as shown in Figure 8 in the same manner as the conventional configuration. That is, by performing hot pressing in a state in which the cushion material 10 for hot pressing of the present embodiment is interposed between each heating platen 13 and a material 12 to be pressed, it is possible to apply uniform heat and pressure to the material 12 to be pressed over the entire surface.

### [Example 1]

Cushion materials of examples and comparative examples were produced, the results of the cushioning property examination and the results of the ignition loss test are shown below. Examples 1 and 2 and comparative examples 1 to 4 have a configuration that includes a surface layer sheet and an adhesive sheet, while a comparative example 5 includes neither a surface layer sheet nor an adhesive sheet, and is formed from only a cushion sheet.

### (Example 1)

Three texturized yarns were each prepared by twisting four glass yarns (E glass fiber, single fiber diameter: 6 µm, the total number of single fibers: 800, yarn count: 67.5 tex) and by performing bulk texturing, and the three texturized yarns were then twisted to prepare a texturized yarn composite twisted yarn (the total number of single fibers: 9600). A doubly-woven bulked glass cloth in which the texturized yarn composite twisted yarn is used as weft of the woven fabric was prepared as a woven fabric material. The glass cloth was caused to impregnate fluororubber so as to be used as a cushion base material. The cushion base materials were prepared for two layers. An adhesive sheet was prepared in which both surfaces of a plain glass cloth are coated with fluororubber. Further, surface layer sheet was prepared by applying a polyimide resin to one surface of a plain glass cloth and by applying fluororubber for adhesion to the opposite surface. The surface layer sheets were prepared for two layers. These materials are laminated in order of the surface layer sheet, the cushion base material, the adhesive sheet, the cushion base material, and the surface layer sheet from the top, and are formed into an integral body by hot pressing to obtain a sample of a cushion material for hot pressing.

### (Example 2)

A sample of a cushion material for hot pressing was obtained in substantially the same manner as in the example 1 except that a texturized yarn composite twisted yarn (the total number of single fibers: 4800) was prepared using a glass yarn (E glass fiber, single fiber diameter: 9 µm, the total number of single fibers: 400, yarn count: 67.5 tex).

### (Comparative example 1)

A doubly-woven bulked glass cloth was prepared as a woven fabric material, a texturized yarn (the total number of single fibers: 3200) prepared by twisting four glass yarns identical to those used in the example 1 and by performing bulk texturing being used as the weft of a woven fabric in the doubly-woven bulked glass cloth. That is, the used texturized yarn is not a texturized yarn composite twisted yarn. The glass cloth was caused to impregnate fluororubber and was used as a cushion base material. The cushion base materials were prepared for six layers. Further, adhesive sheets substantially the same as those used in the example 1 was prepared for five layers. Surface layer sheets substantially the same as those used in the example 1 were prepared for two layers. These materials, that is, the surface layer sheet, the cushion base material, the adhesive sheet, the cushion base material, the adhesive sheet, the cushion base material, the adhesive sheet, the cushion base material, the adhesive sheet, the cushion base material, the adhesive sheet, the cushion base material, and the surface layer sheet are laminated in this order from the top, and are formed into an integral body by hot pressing to obtain a sample of a cushion material for hot pressing.

### (Comparative example 2)

A doubly-woven bulked glass cloth was prepared as a woven fabric material, a texturized yarn prepared by performing bulk texturing on a glass yarn (E glass fiber, single fiber diameter: 9 µm, the total number of single fibers: 7800, yarn count: 1390 tex) being used as weft of a woven fabric in the doubly-woven bulked glass cloth. That is, the used texturized yarn is not twisted, and is not a texturized yarn composite twisted yarn. By using this doubly-woven bulked glass cloth, a sample of a cushion material for hot pressing having substantially the same configuration as the example 1 was obtained.

### (Comparative example 3)

Four yarns were each prepared by twisting two glass yarns identical to those used in the example 1, and bulk texturing was performed on a yarn (the total number of single fibers: 6400) obtained by twisting the four yarns to prepare a texturized yarn. That is, instead of using a texturized yarn composite twisted yarn obtained by twisting texturized yarns, bulk texturing was performed on the twisted yarns to prepare a texturized yarn. A doubly-woven bulked glass cloth in which the texturized yarn is used as weft of a woven fabric was prepared as a woven fabric material. By using this doubly-woven bulked glass cloth, a sample of a cushion material for hot pressing having substantially the same configuration as the example 1 was obtained.

### (Comparative example 4)

A non-woven fabric having a weight per unit area of 450 g/m² and made of poly-m-phenyleneisophthalamide was used as a cushion base material. Three cushion base materials, two adhesive sheets identical to those used in the example 1, and two surface layer sheets identical to those used in the example 1 are used, and the surface layer sheet, the cushion base material, the adhesive sheet, the cushion base material, the adhesive sheet, the cushion base material, and the surface layer sheet are laminated in this order from the top, and are formed into an integral body by hot pressing to obtain a sample of a cushion material for hot pressing.

### (Comparative example 5)

Twenty kraft papers each having a weight per unit area of 190 g/m² were made to overlap with each other to obtain a sample of a cushion material for hot pressing.

A pressing durability test was performed on various cushion materials for hot pressing as described below to measure a change in thickness and cushioning property between before and after the test. The results of the test are shown in table 1.

### [Pressing durability test condition]

Pressurizing force : 40 kgf/cm²
Pressurizing time: 75 minutes
Temperature: 230°C
Heating time: 60 minutes (temperature is increased from 25°C to a predetermined temperature during 30 minutes, and such a state is held for 30 minutes)
Cooling time: 15 minutes
Sample size : 280 mm square
Press machine: 150t test press machine (made by KANSAI ROLL Co., Ltd.)

### (Method for evaluating cushioning property)

Various samples were evaluated in terms of cushioning property before pressing is performed, and after pressing is performed 1 time, 10 times, 50 times, 100 times, and 200 times. The sample of the comparative example 5 is not a cushion material for hot pressing that can withstand repeated pressing and hence, pressing was performed only 1 time. The following pressurizing test was performed on the various samples. Compression cushioning property Fn was obtained from a difference (µm) between a thickness t₁ of the sample when the sample is compressed with a pressurizing force of 0.01 kgf/cm² and a thickness t₂ of the sample when the sample is compressed with a pressurizing force of 40 kgf/cm². The results are shown in table 1. Figure 7 is a graph obtained by plotting the results from table 1 onto a graph.
Pressurizing force: 40 kgf/cm²
Temperature: 230°C
Preheating: 2 minutes under pressurizing condition of 0.05 kgf/cm²
Pressurizing speed: 1 mm/min
Sample size: 25 mmϕ
Sample collection position: one point at a position at least 5 cm away from an edge of durability test sample
Testing device: instron universal testing machine 5565 (made by Instron Japan Co., Ltd.)

Regarding cushioning property, a sample having Fn value of 400 or more was evaluated as good. Regarding durability, a sample having Fn value of 400 or more after pressing is performed 10 times was evaluated as good.

**[Table 1]**

| | Number of Times of Pressing | | | | | | LOI |
|---|---|---|---|---|---|---|---|
| | 0 | 1 | 10 | 50 | 100 | 200 | |
| Example1 | 591 | 562 | 508 | 505 | 497 | 496 | 15.10% |
| Example2 | 740 | 689 | 599 | 571 | 565 | 558 | 15.26% |
| Comparative Example1 | 292 | 260 | 229 | 221 | 219 | 209 | 10.29% |
| Comparative Example2 | 519 | 439 | 364 | 320 | 309 | 306 | 8.26% |
| Comparative Example3 | 599 | 486 | 374 | 350 | 348 | 346 | 13.32% |
| Comparative Example4 | 529 | 349 | 301 | 260 | 235 | 204 | |
| Comparative Example5 | 273 | 192 | | | | | |

An ignition loss test was performed on various cushion materials for hot pressing, and loss on ignition after the test was measured. The results are also shown in table 1. The ignition loss test was performed on the examples 1 and 2 and the comparative examples 1 to 3 in which a woven fabric is used.

As shown in table 1, the examples 1, 2 in which the conditions of the present invention are satisfied have preferable cushioning property, that is, Fn of 400 or more, for each number of times of pressing. In contrast, the comparative example 1 has the result that although cushioning property is less likely to be lowered even when pressing is performed a plurality of times, so that durability is excellent, cushioning property is low. The comparative example 5 has the result that both cushioning property and durability are low. The comparative examples 2 to 5 have the result that although cushioning property is high at an initial stage, cushioning property is extremely lowered even with one test, and Fn falls below 400 after pressing is performed 10 times. Accordingly, in the comparative examples 2 to 5, stable cushioning property cannot be obtained when the cushion material for hot pressing is repeatedly used.

As shown in table 1, it can be understood that, in the examples 1, 2 in which the conditions of the present invention are satisfied, loss on ignition is 5 to 30 mass%.

### INDUSTRIAL APPLICABILITY

According to the present invention, it is possible to provide a cushion material for hot pressing that can maintain preferable cushioning property even when the cushion material for hot pressing is repeatedly used.

### REFERENCE SIGNS LIST

- 1: cushion part
- 1a: glass fiber yarn
- 1b: texturized yarn
- 1c: texturized yarn composite twisted yarn
- 2: surface layer portion
- 3: adhesive layer portion
- 4: adhesive sheet portion
- 5: woven fabric
- 5a: warp
- 5b: weft
- 6: polymer material
- 7: pore
- 10, 10a, 10b: cushion material for hot pressing
- 11: cushion material
- 12: material to be pressed
- 13: heating platen
- 14: mirror plate

## Claims

1. A cushion material (10, 10a, 10b) for hot pressing comprising a cushion part (1), wherein
the cushion part (1) includes
a woven fabric (5) in which a twisted yarn (1c) is used for at least one of warp (5a) or weft (5b); and
a polymer material (6) that is adhered to a surface of a fiber forming the woven fabric (5),
**characterized in that**
the twisted yarn (1c) is formed by twisting a plurality of texturized yarns (1b) made of a glass fiber (1a).

2. The cushion material (10, 10a, 10b) for hot pressing according to claim 1, wherein a diameter of a single fiber of the glass fiber (1a) is 3 to 11 µm.

3. The cushion material (10, 10a, 10b) for hot pressing according to claim 1 or claim 2, wherein a total number of single fibers forming the twisted yarn (1c) is 3000 to 100000.

4. The cushion material (10, 10a, 10b) for hot pressing according to any one of claim 1 to claim 3, wherein when t₁ denotes a thickness of the cushion material (10, 10a, 10b) for hot pressing at a time of compressing the cushion material (10, 10a, 10b) for hot pressing under conditions of 230°C and 0.01 kgf/cm², and t₂ denotes a thickness of the cushion material (10, 10a, 10b) for hot pressing at a time of compressing the cushion material (10, 10a, 10b) for hot pressing under conditions of 230°C and 40 kgf/cm², Fn obtained from a formula (1) described below is 400 or more: $Fn = \left({t}_{1}-{t}_{2}\right) \times 1000 / {t}_{2}$ (1).

5. The cushion material (10, 10a, 10b) for hot pressing according to any one of claim 1 to claim 4, wherein loss on ignition of the twisted yarn (1c) that is extracted from the cushion material (10, 10a, 10b) for hot pressing and to which the polymer material (6) is adhered is 5 to 30%.

## Patentansprüche

1. Polstermaterial (10, 10a, 10b) zum Heißpressen, aufweisend einen Polsterteil (1), wobei
der Polsterteil (1) umfasst
ein Gewebe (5), in dem ein gezwirntes Garn (1c) für wenigstens eines von Kettgarn (5a) oder Schussgarn (5b) verwendet wird; und
ein Polymermaterial (6), das an einer Oberfläche einer das Gewebe (5) bildenden Faser haftet,
**dadurch gekennzeichnet, dass**
das gezwirnte Garn (1c) durch Zwirnen einer Vielzahl von texturierten Garnen (1b), die aus einer Glasfaser (1a) hergestellt sind, gebildet ist.

2. Polstermaterial (10, 10a, 10b) zum Heißpressen nach Anspruch 1, wobei ein Durchmesser einer einzelnen Faser der Glasfaser (1a) 3 bis 11 µm beträgt.

3. Polstermaterial (10, 10a, 10b) zum Heißpressen nach Anspruch 1 oder Anspruch 2, wobei eine Gesamtzahl von einzelnen Fasern, die das gezwirnte Garn (1c) bilden, 3000 bis 100000 beträgt.

4. Polstermaterial (10, 10a, 10b) zum Heißpressen nach einem der Ansprüche 1 bis 3, wobei, wenn t₁ eine Dicke des Polstermaterials (10, 10a, 10b) zum Heißpressen zu einem Zeitpunkt des Komprimierens des Polstermaterials (10, 10a, 10b) zum Heißpressen unter Bedingungen von 230 °C und 0,01 kgf/cm² bezeichnet, und t₂ eine Dicke des Polstermaterials (10, 10a, 10b) zum Heißpressen zu einem Zeitpunkt des Komprimierens des Polstermaterials (10, 10a, 10b) zum Heißpressen unter Bedingungen von 230 °C und 40 kgf/cm² bezeichnet, Fn, das aus einer unten beschriebenen Formel (1) erhalten wird, 400 oder mehr beträgt: $Fn = \left({t}_{1}-{t}_{2}\right) \times 1000 / {t}_{2}$ (1).

5. Polstermaterial (10, 10a, 10b) zum Heißpressen nach einem der Ansprüche 1 bis 4, wobei ein Glühverlust des gezwirnten Garns (1c), das aus dem Polstermaterial (10, 10a, 10b) zum Heißpressen extrahiert wird und an dem das Polymermaterial (6) haftet, 5 bis 30 % beträgt.

## Revendications

1. Matériau d'amortissement (10, 10a, 10b) pour pressage à chaud comprenant une partie d'amortissement (1), dans lequel
la partie d'amortissement (1) comporte
un tissu (5) dans lequel un fil torsadé (1c) est utilisé pour au moins l'une parmi la chaîne (5a) ou la trame (5b) ; et
un matériau polymère (6) qui adhère à une surface d'une fibre formant le tissu (5),
**caractérisé en ce que**
le fil torsadé (1c) est formé en torsadant une pluralité de fils texturés (1b) faits d'une fibre de verre (1a).

2. Matériau d'amortissement (10, 10a, 10b) pour pressage à chaud selon la revendication 1, dans lequel un diamètre d'une fibre unique de la fibre de verre (1a) est de 3 à 11 µm.

3. Matériau d'amortissement (10, 10a, 10b) pour pressage à chaud selon la revendication 1 ou la revendication 2, dans lequel un nombre total de fibres uniques formant le fil torsadé (1c) est de 3000 à 100000.

4. Matériau d'amortissement (10, 10a, 10b) pour pressage à chaud selon l'une de la revendication 1 à la revendication 3, dans lequel lorsque t₁ désigne une épaisseur du matériau d'amortissement (10, 10a, 10b) pour pressage à chaud au moment de la compression du matériau d'amortissement (10, 10a, 10b) pour pressage à chaud dans des conditions de 230 °C et 0,01 kgf/cm², et t₂ désigne une épaisseur du matériau d'amortissement (10, 10a, 10b) pour pressage à chaud au moment de la compression du matériau d'amortissement (10, 10a, 10b) pour pressage à chaud dans des conditions de 230 °C et 40 kgf/cm², Fn obtenu à partir d'une formule (1) décrite ci-dessous est égal ou supérieur à 400 : $Fn = \left({t}_{1}-{t}_{2}\right) \times 1000 / {t}_{2}$ (1).

5. Matériau d'amortissement (10, 10a, 10b) pour pressage à chaud selon l'une de la revendication 1 à la revendication 4, dans lequel la perte par calcination du fil torsadé (1c) qui est extrait du matériau d'amortissement (10, 10a, 10b) pour pressage à chaud et auquel le matériau polymère (6) adhère est de 5 à 30 %.
